# EUROPÄISCHE PATENTANMELDUNG

(11) **EP 1 413 472 A2**
(43) Veröffentlichungstag der Anmeldung: **28.04.2004**
(21) Anmeldenummer: 03019954.1
(22) Anmeldetag: 03.09.2003
(51) Int. Cl.: B60N 2/075

(54) **Gleitschienensystem, insbesondere für Kraftfahrzeugsitze**

(30) Priorität: 25.10.2002 DE 10249698
(71) Anmelder: Westfalia Profiltechnik GmbH & Co. KG, 57271 Hilchenbach (DE)
(72) Erfinder: Müller, Torsten, 57271 Hilchenbach (DE); Thomas, Rüdiger, 35708 Haiger (DE)
(74) Vertreter: Valentin, Ekkehard, Dipl.-Ing.

(57) **Zusammenfassung**

Bei einem Gleitschienensystem (1), insbesondere für Kraftfahrzeugsitze, umfassend parallel voneinander beabstandete Schienenanordnungen, bestehend jeweils aus einer Ober- und einer Unterschiene (2, 3), von denen die bewegliche Oberschiene (2) in der Unterschiene (3) läuft, ist sowohl die Oberschiene (2) als auch die Unterschiene (3) aus einem mit einer gleitfähigen Beschichtung versehenen Metallband geformt, weisen die Oberschiene (2) und die Unterschiene (3) jeweils eine komplementäre, sich dabei zumindest teilweise ausknöpfsicher umschließende Geometrie auf, und ist die Oberschiene (2) aufgrund von Konturübermaßen mit Vorspannung in der Unterschiene (3) angeordnet.

## Beschreibung

Die Erfindung betrifft ein Gleitschienensystem, insbesondere für Kraftfahrzeugsitze, umfassend parallel voneinander beabstandete Schienenanordnungen, bestehend jeweils aus einer Ober- und einer Unterschiene, von denen die bewegliche Oberschiene in der Unterschiene läuft.

Solchermaßen ausgebildete Gleitschienensysteme sind im Stand der Technik hinlänglich bekannt und werden dort eingesetzt, wo es darum geht, Komponenten verschiebbar zu lagern, z.B. Sitzaufbauten für Kraftfahrzeuge, Schubladen für Lastkraftwagen, Unterbodenauszüge im PKW-/Kombi-Bereich und dergleichen. Beim Anwendungsfall für Fahrzeugsitze ist die Unterschiene im Fahrzeugboden befestigt und an der Oberschiene der Sitzaufbau installiert.

Bekannte Schienenanordnungen (vgl. z.B. DE 698 00 143 T2) sind dergestalt ausgebildet, daß die Oberschiene und die Unterschiene mittels Rollkörpern, beispielsweise Kugeln oder Zylinderrollen, ineinander verschiebbar sind. Die Schienen werden zusammen mit den Kugeln bzw. Rollen zu einem Führungs- und Laufsystem montiert. Die Kugeln respektive Rollen sind dabei in sogenannten Kugelkäfigen bzw. Rollenhaltern gelagert und werden durch diese auf Abstand zueinander gehalten. Weiterhin sind die Kugelkäfige oder Rollenhalter in dem Schienensystem durch eingeprägte oder eingeschweißte Anschläge gegen ein "Herauswandern" aus dem Schienensystem gesichert.

Bei dem vorstehend beschriebenen Verstellsystem ergibt sich somit eine nur punktuelle bzw. linienförmige Berührung der Laufschienen mit den Kugeln bzw. Rollen. Im Belastungsfall, insbesondere bei einem Unfall, werden die dabei auftretenden Kräfte lediglich punkt- bzw. linienförmig durch die Rollkörper auf die Schienen übertragen. Die Krafteinleitung auf die profilierten und damit als solche hinreichend steifen Schienen efolgt also nur partiziell, so daß die maximal mögliche Kraftabsorption des Schienensystems nicht genutzt wird.

Weiterhin ist dieses rollgelagerte Verschiebesystem aufgrund der verwendeten Kugeln und Kugelkäfige bzw. Rollen und Rollenhalter herstellungstechnisch sehr aufwendig und damit kostenintensiv.

Der Erfindung liegt daher die Aufgabe zugrunde, ein Verstell- bzw. Schienensystem der eingangs genannten Art zu schaffen, das sich einfacher und kostengünstiger herstellen läßt und gleichwohl hohen Kräften standhält.

Diese Aufgabe wird erfindungsgemäß dadurch gelöst,
- daß sowohl die Oberschiene als auch die Unterschiene aus einem mit einer gleitfähigen Beschichtung versehenen Metallband geformt sind,
- daß die Oberschiene und die Unterschiene jeweils eine komplementäre Geometrie aufweisen und sich dabei zumindest teilweise ausknöpfsicher umschließen, und
- daß die Oberschiene aufgrund von Konturübermaßen mit Vorspannung in der Unterschiene angeordnet ist.

Die Erfindung sieht hierbei vor, daß vorzugsweise hochfeste Kaltbandstähle zur Herstellung der Schienen verwendet werden, auf die von vomeherein, d. h. schon bei deren Herstellung eine sehr gleitfähige und abriebfeste Schicht, z.B. Nitrid- bzw. Teflonbeschichtung, aufgebracht wurde. Anschließend werden aus diesem beschichteten Vormaterial, beispielsweise durch Stanzen oder Rollformen, die gewünschten Profilformen der Ober- bzw. Unterschiene hergestellt. Die Schienengeometrie wird dabei so ausgelegt, daß die Oberschiene einerseits zwar spielfrei in die Unterschiene gefügt werden kann. Andererseits wird durch entsprechende Toleranzen die Oberschiene jedoch mit einer geringfügig größeren Außenkontur als die Innenkontur der Unterschiene gefertigt, so daß sie aufgrund dieser größeren Kontur bzw. des Konturübermaßes mit einer leichten Vorspannung Eingriff in die Unterschiene findet. Durch das vorbeschichtete Bandmaterial, dessen guten Gleiteigenschaften gegebenenfalls durch Zugabe eines fetthaltigen Schmierstoffs noch verbessert werden können, ist es nunmehr - manuell oder mittels eines elektrischen Antriebs - möglich, die Schienen leichtgängig ineinander zu verschieben. Es entfällt somit sowohl der Einbau jeder Art von Rollkörpern als auch das Einbringen von entsprechenden Rollenkörperendanschlägen, woraus sich eine wesentlich einfachere Fertigung ergibt.

Ein weiterer Vorteil des erfindungsgemäßen, form- und kraftschlüssigen Schienensystems ist, daß sich bei Belastung die daraus resultierende Krafteinwirkung auf große Führungsflächen verteilt, was zu einer wesentlich günstigeren Kraftverteilung - hierbei tragen die gesamten Flächen der beiden Schienen - bei sehr hohen Belastungen, etwa bei Unfällen, führt.

Auch kann bei diesem Gleitschienensystem die Baugröße gegenüber herkömmlichen Verschiebesystemen bei gleicher Belastungsfähigkeit verringert werden, da die Verwendung von Kugeln, Kugelkäfigen, Rollen oder dergleichen entfällt.

Des weiteren kann bei dem erfindungsgemäßen Schienensystem auf eine nachträgliche Lackbeschichtung verzichtet werden, da die bereits aufgebrachte Gleitbeschichtung auch gleichzeitig den gewünschten Korrosionsschutz bietet.

Eine Ausgestaltung der Erfindung sieht vor, daß die Oberschiene und die Unterschiene an ihren beiden Längsseiten mit mindestens zwei einander dauernd berührenden Führungsflächen ausgebildet sind. Die beiden Schienenprofile weisen hierbei eine im wesentlichen rautenförmige Konturgebung auf und sind entsprechend dieser Geometrie ausknöpfsicher, aber unverändert spielfrei ineinander verschiebbar. Sowohl oberhalb als auch unterhalb der links- bzw. rechtsseitigen Rautenspitze der beiden Schienen erstrecken sich die einander zugewandten, sich ständig bzw. dauernd berührenden Führungsflächen über die gesamte Länge der Ober- und der Unterschiene.

Nach einer weiteren Ausgestaltung der Erfindung wird vorgeschlagen, daß die Oberschiene auf die Bodenfläche der Unterschiene gerichtete Abkantungen aufweist. Hierbei ist die Oberschiene in ihrem unteren Teilbereich beidseitig mit einem nach innen abgekanteten Stufenabsatz ausgebildet. Über die beiden Stufenabsätze erfährt die Oberschiene eine zusätzliche Abstützung am Boden der Unterschiene. Im Zusammenspiel mit den seitlichen Führungsflächen der Ober- und der Unterschiene wird dadurch insgesamt eine Versteifung des form- und kraftschlüssigen Schienensystems erreicht.

Eine bevorzugte Ausgestaltung der Erfindung sieht vor, daß die Oberschiene einen im Querschnitt im wesentlichen U-förmigen Mittenabschnitt mit nach außen abstehenden und im weiteren Verlauf V-förmig nach oben abgekanteten Führungsflanschen aufweist, die von an ihren oberen freien Enden nach innen gekröpften Flanschen einer im Querschnitt rautenförmig, oben offen ausgebildeten Unterschiene umschlossen sind. Durch diese speziell Geometrie bzw. Konturgebung der zueinander komplementären Schienen werden große,sich berührende Führungsflächen bereitgestellt. Aufgrund der außerdem erreichten Vielzahl der Führungsflächen ergibt sich eine optimale Lastverteilung auf das gesamte Schienensystem. Durch die nach innen gekröpften Flansche der Unterschiene wird die Oberschiene selbst bei höchsten Vertikalkräften ausknöpfsicher in der Unterschiene gehalten.

Gemäß einer weiteren Ausführung der Erfindung ist vorgesehen, daß die Oberschiene einen im Querschnitt im wesentlichen U-förmigen Mittenabschnitt mit nach außen abstehenden, zunächst abfallenden und nach einem gerundeten Übergangsabschnitt im weiteren Verlauf senkrecht nach oben abgewinkelten, an ihren freien Enden hakenartig nach innen gekröpften Führungsflanschen aufweist, die von an ihren oberen freien Enden jeweils hakenartig nach innen geköpften, hochragenden Flanschen einer zwischen den Flanschen oben offenen Unterschiene umschlossen sind. Diese Geometrie des Schienensystems ermöglicht es, daß die Oberschiene über einen noch größeren Bereich formschlüssig von der Unterschiene eingehaust wird. Dadurch läßt sich noch wirkungsvoller verhindern, daß die Oberschiene aus der Unterschiene herausgerissen wird.

Weitere Einzelheiten und Vorteile der Erfindung ergeben sich aus den Ansprüchen und der nachfolgenden Beschreibung, in der in den Figuren dargestellte Ausführungsbeispiele der Erfindung näher erläutert werden. Es zeigen:
- Fig. 1: als Einzelheit in einer perspektivischen Gesamtansicht eine erste Ausführungsform zweier Schienenprofile in der Gebrauchs- bzw. Einbaulage;
- Fig. 2: als Einzelheit eine Ausgestaltung des Schienensystems nach Fig. 1;
- Fig. 3: als Einzelheit in einer perspektivischen Gesamtansicht eine andere Ausführungsform zweier Schienenprofile in der Gebrauchs- bzw. Einbaulage; und
- Fig. 4: als Einzelheit in einer perspektivischen Gesamtansicht eine weitere Ausführungsform zweier Schienenprofile in der Gebrauchs- bzw. Einbaulage.

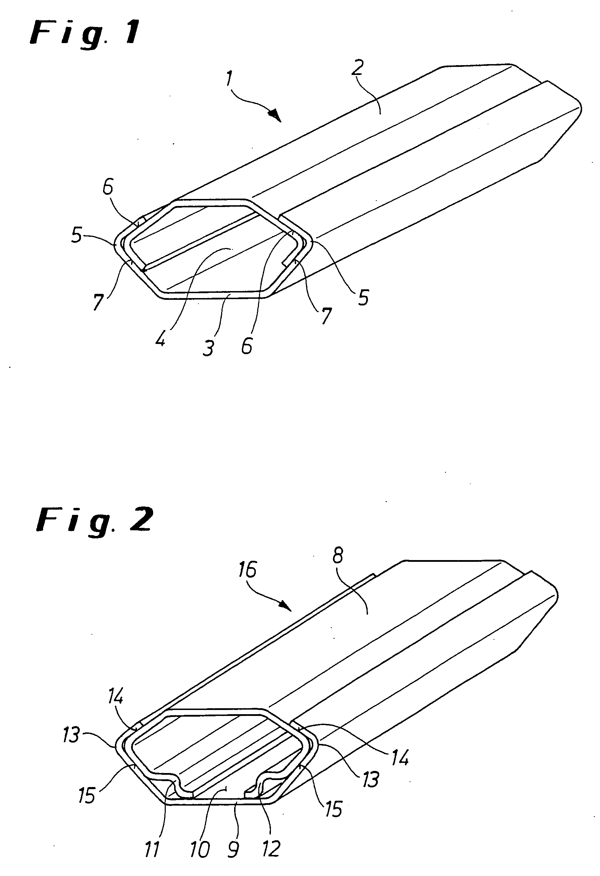

In Fig. 1 ist ein Gleitschienensystem 1, bestehend aus einer Oberschiene 2 und einer Unterschiene 3, dargestellt. Das Schienensystem 1 dient beispielsweise zur verschiebbaren Montage eines hier nicht dargestellten Fahrzeugsitzes in einem Kraftfahrzeug. Hierbei wird die Unterschiene 3 ortsfest im Fahrzeugboden angeordnet und an der Oberschiene 2 der Fahrzeugsitz montiert.

Die beiden Schienenprofile 2 und 3, die im Querschnitt eine im wesentlichen rautenförmige Konturgebung aufweisen und entsprechend ihrer Geometrie ausknöpfsicher, aber dabei spielfrei ineinander verschiebbar sind, werden aus einem hochfesten Kaltbandstahl hergestellt und beidseitig mit einer Gleit- und Verschleißkomponente, beispielsweise Nitrid oder Teflon beschichtet.

Die Oberschiene 2 weist eine geringfügig größere Außenkontur als die Innenkontur der Unterschiene 3 auf, so daß sie unter einer leichten Vorspannung Eingriff in die Unterschiene 3 findet. Aufgrund der gleitfähigen Beschichtung des Schienenmaterials und gegebenenfalls unter Zuhilfenahme eines fetthaltigen Schmierstoffes lassen sich die Oberschiene 2 und die Unterschiene 3 spielfrei und formschlüssig ineinander verschieben, ohne dafür entsprechende Rollkörper vorzusehen. Die relative, gleitende Verschiebung der Oberschiene 2 zur Unterschiene 3 erfolgt dabei manuell bzw. durch einen elektrischen Antrieb, beispielsweise Spindelantrieb, für den ein ausreichend großer Bauraum 4 zwischen den Schienen 2 und 3 vorgesehen ist. Im konkreten Ausführungsbeispiel weisen die Oberschiene 2 und die Unterschiene 3 sowohl oberhalb als auch unterhalb ihrer linksseitigen und ihrer rechtsseitigen Rautenspitze 5 jeweils einander zugewandte und ständig aufeinanderliegende Auflage- bzw. Berührungsflächen 6, 7 für die spielfreie Verschiebung auf.

Gemäß Fig. 2 ist eine alternative Ausführungsform einer Oberschiene 8 und einer Unterschiene 9 des Schienensystems nach Fig. 1 dargestellt. Die beiden Schienen 8 und 9 weisen im Querschnitt wiederum eine im wesentlichen rautenförmige Konturgebung auf. Die Oberschiene 8 ist dabei in ihrem unteren, dem Boden 10 der Unterschiene 9 zugewandten Teilbereich beidseitig mit einem jeweils nach innen abgekanteten Stufenabsatz 11, 12 ausgebildet. Die Oberschiene 8 erfährt über die beiden Stufenabsätze 11, 12 eine zu den oberhalb und unterhalb der links- und rechtsseitigen Rautenspitzen 13 einander zugewandten Auflage- bzw. Berührungsflächen 14, 15 zusätzliche Abstützung am Boden 10 der Unterschiene 9. Insgesamt wird dadurch eine zusätzliche Versteifung des aus der Oberschiene 8 und der Unterschiene 9 bestehenden Schienensystems 16 erzielt.

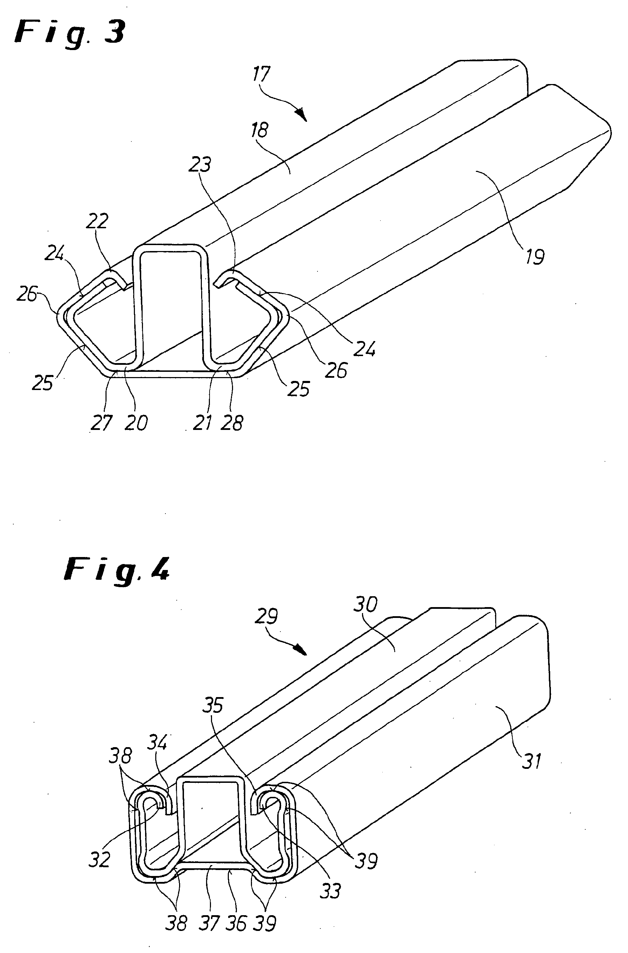

In der Fig. 3 ist eine weitere Ausführungsform eines Schienensystems 17, bestehend aus Oberschiene 18 und Unterschiene 19, dargestellt. Hierbei weist die Oberschiene 18 einen im Querschnitt im wesentlichen U-förmigen Mittenabschnitt mit nach außen abstehenden und im weiteren Verlauf V-förmig nach oben abgekanteten Führungsflanschen 20, 21 auf, die von an ihren oberen freien Enden nach innen gekröpften Endstegen 22, 23 der im Querschnitt rautenförmig, oben offen ausgebildeten Unterschiene 19 umschlossen sind. Beim Einbau der Oberschiene 18 in die Unterschiene 19 werden zahlreiche sich ständig berührenden bzw. aufeinanderliegenden Führungsflächen, nämlich sowohl an den einander zugewandten Flächen 24, 25 beidseitig der Rautenspitzen 26 als auch an den links- bzw. rechtsseitig einander zugewandten Bodenflächen 27, 28 bereitgestellt. Aufgrund der Vielzahl der Führungsflächen 24, 25 bzw. 27 und 28 ergibt sich eine optimale Lastverteilung auf das gesamte Schienensystem 17. Des weiteren verteilt sich bei Belastung die Kraft auf größere Flächen, was zur günstigeren Kraftverteilung bei Extrembelastung, etwa einem Unfall führt. Durch die Verkröpfung der Unterschiene 19 an ihren Flanschen 22, 23 wird die Oberschiene 18 selbst bei sehr hohen Vertikalkräften ausknöpfsicher in der Unterschiene 19 gehalten.

Die Fig. 4 zeigt eine weitere Bauform eines Schienensystems 29 bestehend aus Oberschiene 30 und Unterschiene 31. Die Oberschiene 30 weist hier einen im Querschnitt im wesentlichen U-förmigen Mittenabschnitt mit nach außen abstehenden, zunächst abfallenden und nach einem gerundeten Übergangsabschnitt im weiteren Verlauf senkrecht nach oben abgewinkelten, an ihren freien Enden hakenartig nach innen gekröpften Führungsflanschen 32, 33 auf, die von an ihren oberen freien Enden jeweils hakenartig nach innen gerundet gekröpften, hochragenden Flanschen 34, 35 einer zwischen den Flanschen 34, 35 oben offenen Unterschiene 31 umschlossen sind. Weiterhin ist die Unterschiene 31 an ihrem Mittelflansch 36 mit einer verstärkenden, etagenförmigen Erhöhung 37 ausgebildet.

Die Oberschiene 30 wird hierbei von ihren gerundeten Übergangsabschnitten bis hin zu den Enden der hakenartig nach innen gekröpften Führungsflanschen 32, 33 formschlüssig von der Unterschiene 31 eingehaust. Somit werden über diesen gesamten Bereich einander zugewandte, sich berührende bzw. aufeinnderliegende Führungsflächen 38, 39 zwischen der Oberschiene 30 und der Unterschiene 31 zur Verfügung gestellt. Selbst bei extremen Krafteinwirkungen bleibt das Schienensystem 29 geschlossen.

## Patentansprüche

1. Gleitschienensystem (1), insbesondere für Kraftfahrzeugsitze, umfassend parallel voneinander beabstandete Schienenanordnungen, bestehend jeweils aus einer Ober- und einer Unterschiene (2, 3), von denen die bewegliche Oberschiene (2) in der Unterschiene (3) läuft,
**dadurch gekennzeichnet,**
- **daß** sowohl die Oberschiene (2, 8, 18, 30) als auch die Unterschiene (3, 9, 19, 31) aus einem mit einer gleitfähigen Beschichtung versehenen Metallband geformt sind,
- **daß** die Oberschiene (2, 8, 18, 30) und die Unterschiene (3, 9, 19, 31) jeweils eine komplementäre, sich zumindest teilweise ausknöpfsicher umschließende Profil-Geometrie aufweisen, und
- **daß** die Oberschiene (2, 8, 18, 30) aufgrund von Konturübermaßen mit Vorspannung in der Unterschiene (3, 9, 19,31) angeordnet ist.

2. Gleitschienensystem nach Anspruch 1,
**dadurch gekennzeichnet,**
**daß** die Oberschiene (2) und die Unterschiene (3) an ihren beiden Längsseiten mit mindestens zwei einander berührenden Führungsflächen (6, 7) ausgebildet sind.

3. Geitschienensystem nach Anspruch 2,
**dadurch gekennzeichnet,**
**daß** die Oberschiene (8) auf die Bodenfläche (10) der Unterschiene (9) gerichtete Abkantungen (11, 12) aufweist.

4. Gleitschienensystem nach einem der Ansprüche 1 bis 3,
**dadurch gekennzeichnet,**
**daß** die Oberschiene (18) einen im Querschnitt im wesentlichen U-förmigen Mittenabschnitt mit nach außen abstehenden und im weiteren Verlauf V-förmig nach oben abgekanteten Führungsflanschen (20, 21) aufweist, die von an ihren oberen freien Enden nach innen gekröpften Flanschen (22, 23) einer im Querschnitt rautenförmig, oben offen ausgebildeten Unterschiene (19) umschlossen sind.

5. Gleitschienensystem nach einem der Ansprüche 1 bis 3,
**dadurch gekennzeichnet,**
**daß** die Oberschiene (30) einen im Querschnitt im wesentlichen U-förmigen Mittenabschnitt mit nach außen abstehenden, zunächst abfallenden und nach einem gerundeten Übergangsabschnitt im weiteren Verlauf senkrecht nach oben abgewinkelten, an ihren freien Enden hakenartig nach innen gekröpften Führungsflanschen (32, 33) aufweist, die von an ihren oberen freien Enden jeweils hakenartig nach innen gekröpften hochragenden Flanschen (34, 35) einer zwischen den Flanschen (34, 35) oben offenen Unterschiene (31) umschlossen sind.
